# EUROPEAN PATENT SPECIFICATION

(11) **EP 1 675 422 B1**
(45) Date of publication and mention of the grant of the patent: **17.11.2010**
(21) Application number: 04106915.4
(22) Date of filing: 22.12.2004
(51) Int. Cl.: H04M 3/54

(54) **System and method for redirecting communications for a mobile device**
Vorrichtung und Verfahren zur Neuorientierung von Kommunikationen mit einem mobilen Endgerät
Système et méthode pour réorientation des communications pour un terminal mobile

(43) Date of publication of application: 28.06.2006
(73) Proprietor: RESEARCH IN MOTION LIMITED, Waterloo, Ontario N2L 3W8 (CA)
(72) Inventor: Lazaridis, Mihal, N2L 3W8, Waterloo, (CA)
(74) Representative: Rickard, David John

(56) References cited:
- EP-A- 1 054 571
- EP-A- 1 395 066
- GB-A- 2 371 717
- US-A1- 2004 185 825
- US-A1- 2004 192 353

## Description

The following is directed in general to mobile communications devices, and more particularly to a method and system for automatically instructing a network operations center in a mobile communications system to redirect communications for a mobile device.

Mobile communications devices (mobile devices), such as wireless PDAs, cellular telephones and smart phones, are becoming increasingly popular for business use due in part to the tendency of today's worker to be out of the office while still being required to be in touch with colleagues, customers and clients. Mobile devices are also very popular for personal use as they enable a person to communicate with friends and family from nearly any location. The relatively recent increase in sophistication, decrease in cost and improvements in services and features supported by mobile communications infrastructures and devices have made such products and services increasingly attractive to users.

Communications features such as call redirecting (also known as "call forwarding") help make mobile devices really useful for users. Call redirecting enables a communication device user to command the device's network operations center to redirect communications for the communications device to an alternate communications endpoint. For instance, an email normally received wirelessly by the mobile device may be redirected to a desktop computer, or a telephone call normally received wirelessly by the mobile device may be redirected to a desktop telephone. To effect redirecting, using the mobile device a user manually initiates a wireless command to a call controller to redirect calls for the mobile device to an alternate communications device. A benefit accruing from mobile device call forwarding in particular is the option of a user employing a generally less-expensive "land-line" network to receive calls for the mobile device, while being accessible via the mobile device communications address. For instance, when a user reaches the office the user may want all incoming mobile device communications to be directed to their desktop telephone. Similarly, when the user gets home for the day, the user may want all incoming mobile communications to be directed to their home telephone. Furthermore, in anticipation of soon being outside a wireless service area, a user has the option of, for instance, continuing to receive calls by having the wireless network redirect calls through an alternate network to a land-line communications device in a location the user expects to be.

Most network operators offer call redirecting as an option to be activated on the user's account for a fee. In fact, call redirecting is well known in the industry as a method by which a user can deal with multiple phone numbers. However, a difficulty with the requirement of the user to manually activate and de-activate the service is that It is very easy for a user to forget to do so. That is, in a situation where redirecting would be advantageous to the user, a user must remember to inform the network operations center to redirect communications. A further difficulty with activation by wireless command Is that, where wireless access is not available to a mobile device user, redirecting cannot be activated using the mobile device.

Cingular, a wireless provider headquartered in Atlanta, Georgia, has offered battery chargers incorporating a feature named FastForwardT^{™} to address the problems due to mandatory manual activation of call forwarding. FastForward endows a battery charger with the intelligence to send a message to a mobile device to which it is connected, causing In turn the mobile device to send a wireless command to the network operations centre to redirect all calls to an alternate communications endpoint. Cingular's solution is useful in that it overcomes the requirement that call forwarding be activated manually. However, FastForward is a somewhat complex and costly logic component to add to the battery charger, and battery chargers incorporating the feature must be connected to a mobile device via both a serial data connection and a power connection. Normally, a user Is not willing to spend large sums of money for a battery charger. Furthermore, Cingular's solution does not address the problem of being unable to trigger call forwarding while outside a wireless coverage area.

It is object of an aspect of the present invention to provide a method and system for triggering redirecting of calls for a mobile device that addresses at least the above-described deficiencies.

EP0154571 discloses an automatic call forwarding system which is triggered by placing a mobile device in its charging cradle. EP1395066 discloses a call redirection system for use with a mobile device when outside its home wireless network coverage area, and in which a proxy server is used to forward a redirection command to the home wireless network centre. GB2371717 discloses a system for automatically switching a mobile device between a GSM network and a DECT base station.

In accordance with one aspect of the present invention, there is provided a method in a mobile device of triggering redirecting of communications for the device, the method comprising: detecting the connection of the mobile device to a host; receiving from the host, a host identifier that identifies the host; using the received host identifier as a key into a table on the mobile device to determine a command to redirect calls for the mobile device to an alternate communications endpoint; determining whether memory in the mobile device stores an identification of the alternate communications endpoint that corresponds to the received host identifier; in the event that the mobile device stores an identification of the alternate communications endpoint, retrieving the identification of the alternate communication endpoint from the mobile device; in the event that the mobile device does not store an identification of the alternate communications endpoint determining whether the host stores the identification of the alternate communications " endpoint, and if so retrieving the identification of the alternate communications endpoint from the host; and causing the command and the identification of the alternate communications endpoint to be transmitted to a network operations center.

The method can be implemented entirely by the mobile device. Alternatively, the mobile device may instruct the host to transmit the command in certain situations such as when the mobile device is unable to gain access to a wireless network in order to transmit the command.

In accordance with another aspect of the present invention, there is provided a mobile device incorporating a system configured to trigger redirection of communications for the mobile device according to the method of any preceding claim, the system comprising: a memory storing a table associating host identifiers with respective commands to redirect calls for the mobile device to respective communications endpoints; a detector operable to detect connection of the mobile device to a host; a receiver operable to receive from a host, a host Identifier that identifies the host; and a processor operable to perform said determining and retrieving and cause the command to be transmitted to a network operations center.

As would be understood by one of ordinary skill in the art, the provision of automatic triggering of redirecting of calls enables a user to set up the feature once and lest it activate itself in response to a user's action. Also, the benefit of having the mobile device initiate the call redirecting command in response to detecting the connection is that a battery charger need not do so (keeping its cost low), and special programs for communicating with a mobile device need not necessarily be installed. When required, the additional benefit of having the host transmit the command to the network operations center is that the feature can be activated when the phone Is outside its wireless service area, or when non-wireless command transmission is most beneficial. Thus, the call redirecting feature may be used to its full advantage when actually needed.

These together with other aspects and advantages, which will be subsequently redirecting features may be used to its full advantage when actually needed.

These together with other aspects and advantages, which will be subsequently apparent, reside in the details of construction and operation as more fully hereinafter described and claimed, reference being had to the accompanying drawings forming a part hereof, wherein like numerals refer to like parts throughout.

### Brief Description of the Drawings

A detailed description of the preferred embodiment is set forth in detail below, with reference to the following drawings, in which:
Figure 1 is a block diagram of a typical communications system including a mobile device, a host and a network operations centre in which the methods and systems described herein may be implemented;
Figure 2 is a block diagram showing features of the mobile device of Figure 1 for triggering call redirecting;
Figure 2A shows exemplary tables in a database stored In memory of the mobile device of Figure 2;
Figure 3 is a block diagram showing features of a switch in the network operations centre of Figure 1 with which the host of Figure 1 may communicate;
Figure 3A shows an exemplary switch table in a database stored in memory of the switch of Figure 3;
Figure 4 is a flowchart showing basic steps implemented by the mobile device of Figure 2 for triggering call redirecting;
Figure 5 is a flowchart showing in more detail the steps implemented by the mobile device to detect a connection to a host;
Figure 6 is a flowchart showing in more detail the steps and decisions implemented by the mobile device to determine how a call redirecting command is to be transmitted;
Figure 7 is a flowchart showing in more detail the steps and decisions implemented by the mobile device after determining how a call redirecting command is to be transmitted to initiate transmission of a call redirecting command;
Figure 7A shows an exemplary call redirecting command sent from the mobile device or the host to the network operations centre switch, and an exemplary call redirecting cancel command;
Figure 8 is a flowchart showing basic steps implemented by the network operations centre switch of Figure 3 for receiving a call directing command and effecting call redirecting;
Figure 9 is a flowchart showing in more detail the steps implemented by the network operations centre switch for determining an address of the alternate communications endpoint upon receiving a call redirecting command;
Figure 10 is a flowchart showing the steps implemented by the network operations centre switch for canceling call redirecting upon receipt of a cancel command.

### Detailed Description

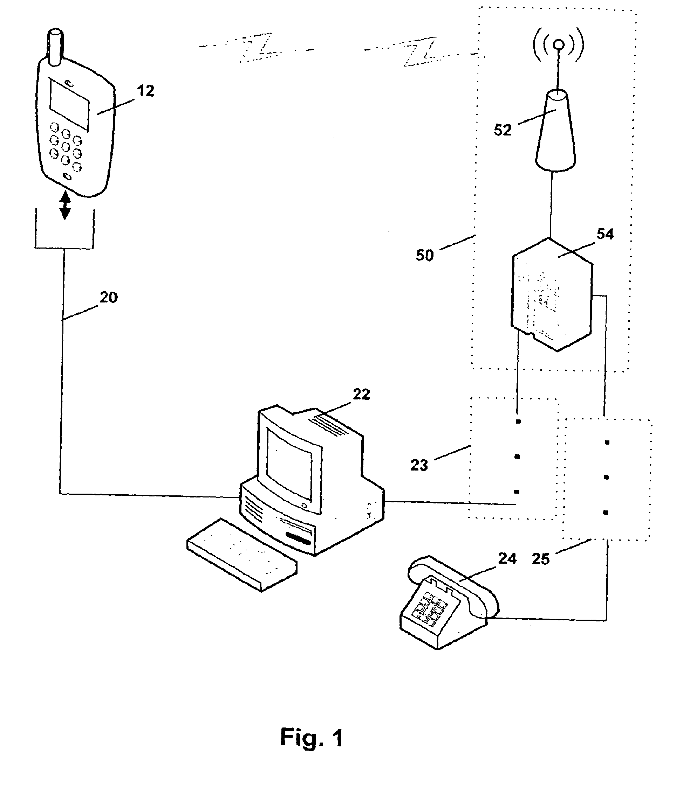

With reference to Figure 1, a communications system 10 in which the invention may be implemented is shown. System 10 includes a mobile device 12 which under typical circumstances communicates voice and/or data using a wireless protocol with a network operations centre 50 via an antenna 52. Network operations centre also comprises a switch 54 connected to the antenna 52 for coordinating directing of communications received for mobile device 12 and other such devices that are part of the network.

The mobile device 12 is connectable via an advanced USB (Universal Serial Bus) charging cable 20 to a host PC 22. The charging cable 20 is capable of transferring data between the mobile device 12 and the host PC 22 and, if required by the mobile device 12, coincidentally transfer a charging current to the mobile device 12 for maintaining its power supply's charge or for powering the mobile device 12 while it is connected to the host PC 22.

The USB specification was developed by a group of companies that were interested in developing a communication bus specification for connecting devices such as handheld mobile devices and personal computers. USB is now a pervasive standard for connecting mobile phones, devices, digital cameras and so forth to personal computers. One of the chief benefits to USB is its improved plug-and-play capability. Plug-and-play is a computer industry term used to describe functionality whereby devices, upon connection to a host, may immediately exchange data with the host. Some prior technologies required re-booting of the computer to which a new device was connected to have the computer execute a number of initialization routines in order to recognize such a device prior to data exchange. Other standards such as RS232 that are considered plug-and-play compatible are not as robust in the sense that detection of, and exchange of initial identification packets with, devices is not guaranteed. Furthermore, such standards cannot boast the data transfer speeds that USB offers. Another chief benefit of USB is that it is a bus structure, so that many devices can be daisy-chained off of very few USB connectors.

With USB, a user can connect a handheld device to a computer and immediately synchronize data such as telephone numbers, contacts, appointments, digital photographs and the like without re-booting the computer.

A USB device is connected to a host using a USB cable, which comprises a Vbus and GND wires for power transfer, and D+ and D- wires for data transfer. Through the Vbus and GND wires, power (at typically 5 volts) may be transmitted to a USB device in order to operate the device or re-charge its power supply. Through the D+ and D- wires, data can be transferred at one of several selected rates agreed upon during handshaking between the host and the device.

Further details of the USB specification can be found at the USB Implementers Forum (IF) website at http://www.usb.org.

The Host PC 22 is connected to the network operations centre switch 54 via a data network 23. Connection and communication on the data network 23 is made as is well known in the art using any suitable data network configuration and protocol, such as Ethernet TCP/IP (Transmission Control Protocol/Internet Protocol - the Internet) in combination with SMTP (Simple Mail Transfer Protocol - standard email).

An alternate telephone 24 is connected, via a telephone network 25 to the network operations centre switch 54. Connection and communication of the telephone network 25 is made as is well known in the art using any suitable telecommunications network configuration and protocol, such as PSTN (Public Switched Telephone Network) or ISDN (Integrated Services Digital Network). Connection between the telephone 24 and the switch 54 may not be direct. It is more likely that these components are connected via a vast series of call controllers, switches etc. that are part of the telephone network 25.

According to the illustrated embodiment of the invention, when the mobile device 12 is connected via the USB cable 20 to the host PC 22, the mobile device 12 detects the connection and initiates transmission of a command to the network operations centre 50 to redirect calls for the mobile device 12 to the alternate communications endpoint 24. As will be described in more detail below, the command may be sent to the network operations centre 50 by the host PC 22 through the data network 23 to the switch 54 or by the mobile device 12 wirelessly via the network operations centre antenna 52.

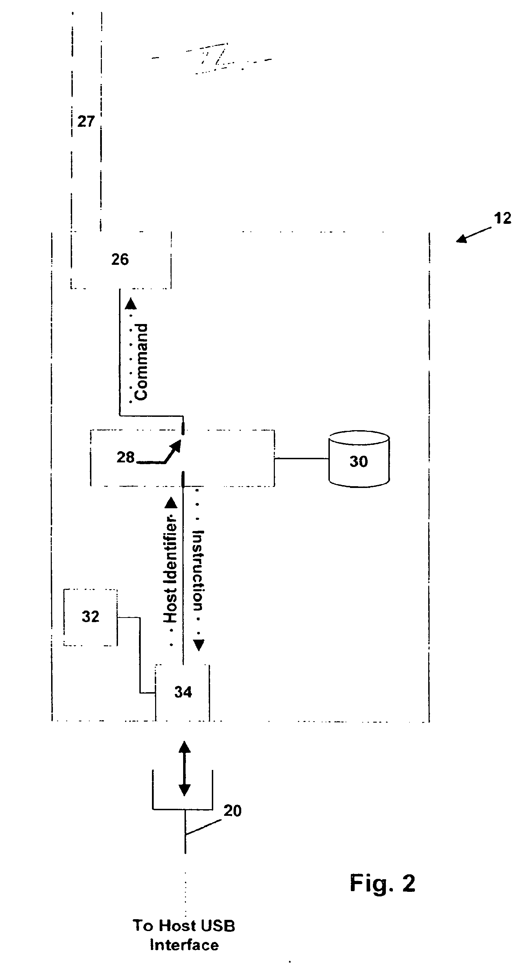

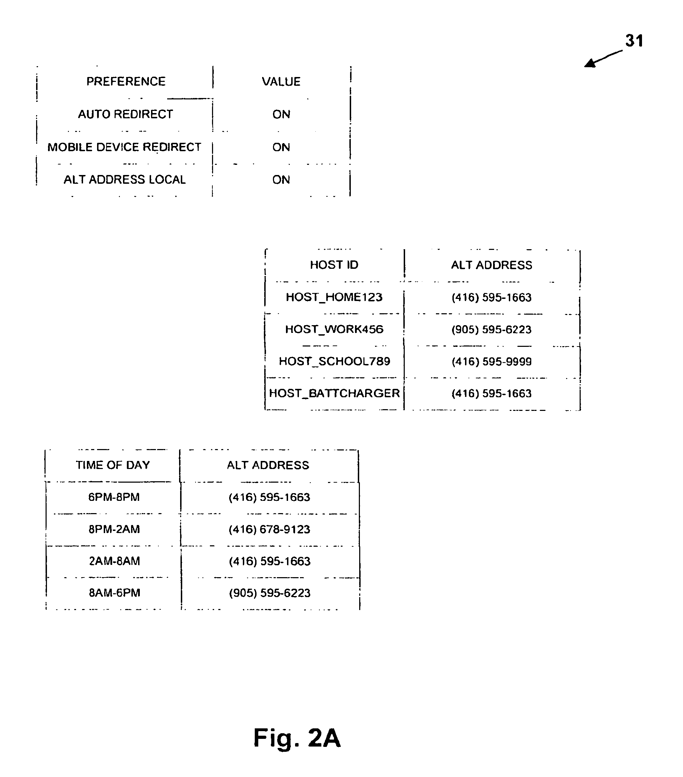

The components for handling the foregoing in the mobile device 12 are shown in further detail in Figure 2. A wireless transceiver 26 is connected to an antenna 27 and handles transmission and reception of wireless communications to and from the network operations centre 50 via the network operations centre antenna 52. A processor 28 handles coordination of the functions of the mobile device 12. The processor 28 is connected via an internal data bus (shown only in part) in a known manner to the wireless transceiver 26, a device memory 30 and an advanced USB interface 34. A power supply 32 is connected to the other components of the mobile device 12 via a power bus, but only the connection to the USB interface 34 is shown for the purposes described herein. The power supply 32 comprises batteries and supporting circuitry for handling power management and charging functions. The device memory 30 contains programs and data usable by the processor 28 for operating and configuring the mobile device 12.

The USB interface 34 and the processor 28 interchange signals regarding the coordination of data being received from the host PC 22 and regarding the management of operation of the USB interface 34. This interchange is done under the coordination of the programs in the device memory 30. For instance, the receipt of data by the USB interface 34 from the host PC 22 is signaled to the processor 28, and in response the processor 28 can coordinate storage of the data in the memory 30, or control other components of the mobile device 12 on the basis of the data. Furthermore, when the USB interface 34 is connected to a similar, counterpart USB interface in the host PC 22 via the advanced USB charging cable 20, the USB interface 34 can detect a charging voltage applied by the host PC 22 and in response signal the processor 28 of the application of the charging voltage. As can be seen, such a signal is an indication to the processor 28 that the mobile device 12 is connected to the host PC 22.

The USB specification is generally ideal for connection of mobile devices to host PCs because of its plug-and-play capability. That is, a host PC can recognize that a mobile device has been connected and start transferring data almost instantly, without having to go through the shut-down/re-start procedures as has been typical of parallel, serial connections etc. in the past. Plug-and-play capability is provided by the host PC operating system which is able to load device drivers into memory upon detection of a load at its USB interface.

Figure 2A shows tables in a database 31 in the memory 30 of the mobile device 12. As can be seen, a number of preferences are available to a user to configure the behavior of the mobile device 12 for initiating transmission of a call redirecting command. Such preferences include the option to turn auto call redirecting ON/OFF, the option to first have the mobile device 12 transmit the call redirecting command (as opposed to the host PC 22, for instance), and the option to obtain an alternate address for call forwarding locally (i.e. from the database 31 of the memory 30). Furthermore, other tables shown include preferences for associating addresses of alternate communications endpoints with different hosts (work computer, home computer etc.), and/or associating addresses of alternate communications endpoints with time of day such that the alternate communications address sent with a redirecting command (as described below) is based on the time of day the redirecting command is sent.

As would be understood by one of ordinary skill in the art, the host PC 22 comprises an advanced USB interface for communication via the advanced USB charging cable 20 with the mobile device 12 and for providing a charging voltage via the advanced USB charging cable 20 to the mobile device 12. The USB interface on the host PC 22 receives instructions from the mobile device 12 to transmit a redirecting command to the network operations centre 54 via its Ethernet network interface. The command sent by the host PC 22 may be an email or another such message.

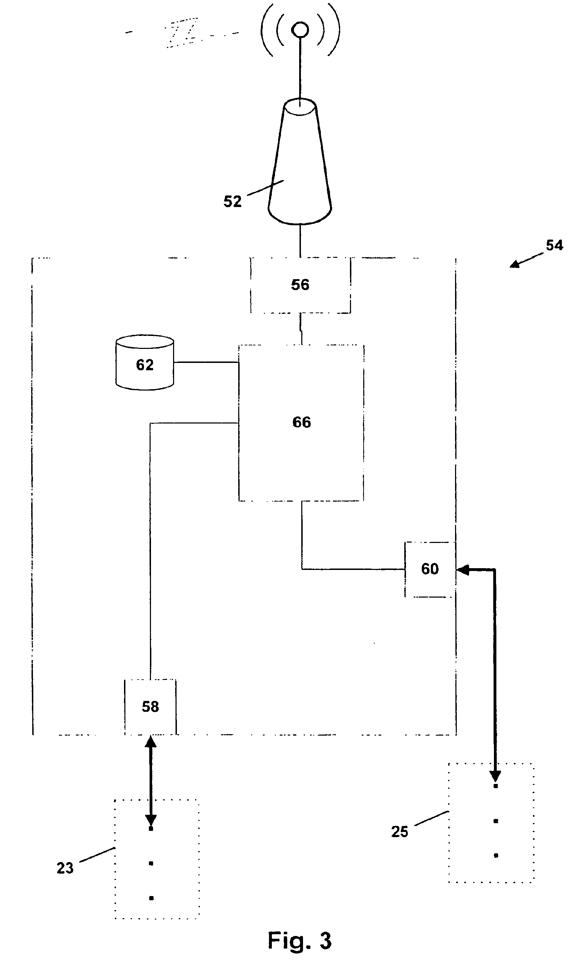

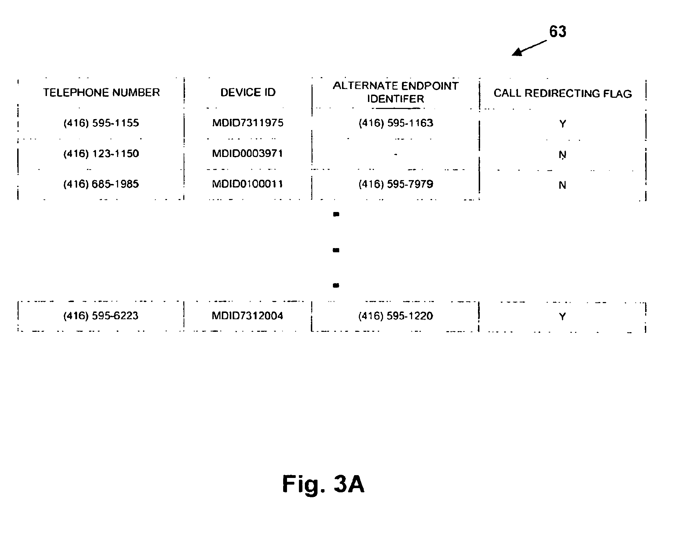

The components of the network operations centre switch 54 for handling receipt of a redirecting command from either the mobile device 12 or the host PC 28 are shown in Figure 3. The switch 54 includes a wireless transceiver 56 for transmitting and receiving data and/or voice to and from devices such as the mobile device 12, via the antenna 52. The switch 54 also includes an Ethernet interface 58 for handling communications on the data network 23, and a telecommunications interface 60 for handling receipt and for directing calls between devices such as the mobile device 12 and other devices on the telephone network 25. The switch 54 further includes a memory 62 for storing switch operation programs and data, a power supply (not shown), and a processor 66 for handling operation of the switch 54. The processor 66 is connected to the other components of the switch 54 via an internal data bus (only parts shown for illustration purposes), as would be understood by one of ordinary skill in the art.

Figure 3A shows a table in a database 63 in the memory 62 of the network operations switch 54. As can be seen, a call request arriving at the switch 54 identified by a telephone number can be associated with a mobile device ID and transmitted to the corresponding mobile device. Additional columns in the table include a call redirecting flag and an alternative endpoint identifier, as will be described in further detail below.

The mobile device 12 and the network operations centre 50 exchange voice and/or data in any conventional manner during standard operations of the communications system 10. For instance, when a user of the mobile device 12 wishes to place an outgoing call, a call request including an identification of the desired endpoint is transmitted by the mobile device 12 to the network operations centre 50 for relaying to the telephone network 25 for distribution to a call controller corresponding to the desired endpoint. When the outgoing call request is answered, the two devices are connected and communications between parties may proceed. In a similar manner, calls for the mobile device 12 from other endpoints are relayed onto the telephone network 25 to the network operations centre 50. The switch 54 receives the identification of the mobile device 12 in the incoming call, and directs the incoming call to the mobile device 12.

The procedure for connecting calls received from, for instance, a TCP/IP telephone via the data network 23 or through the wireless transceiver 56, while each employing respective communications standards and protocols, is for the purposes of triggering call redirecting the same as those received from the telephone network 25.

When an incoming call request is received by the network operations centre 50 (whether, as mentioned above, the call request is received via the wireless transceiver 56, the data network 23 or the telephone network 25), the processor 66 is alerted. In response to receipt of the incoming call request, the processor 66 (instructed by programs in memory) parses the incoming call request to extract the telephone number identifying the mobile device 12. Using the telephone number as a key, the processor 66 refers to a database 63 in memory to retrieve a hardware ID for the mobile device 12, and has the transceiver 56 send a ring instruction to the mobile device 12. When the user of the mobile device 12 answers the call, switch 54 connects the incoming call to the mobile device 12.

The method of operation of system 10 for triggering call redirecting will be described below.

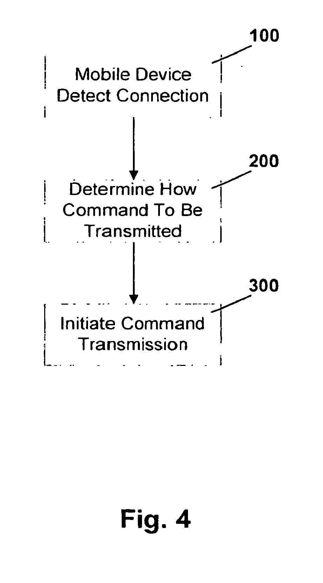

Figure 4 is a flow chart showing the basic steps of the method for triggering redirecting of calls for the mobile device 12. First, the mobile device 12 detects a connection to the host PC 22 (step 100). At this stage, the mobile device 12 has become aware on its own that it has been connected to the host PC 22. In response to the detection of the connection, the mobile device 12 determines how calls should thereafter be forwarded (step 200). Once the mobile device 12 has determined how calls should be forwarded, the mobile device 12 initiates transmission of a command to the network operations centre 50 to redirect calls for the mobile device 12, in accordance with the determination.

In general, step 100 comprises, when the mobile device 12 is connected to the host PC 22 via the advanced charging cable 20, the USB interface 34 detecting the application of charging voltage and signaling the processor 28 of the detection. The USB interface 34 also retrieves a host PC ID from the host PC 22.

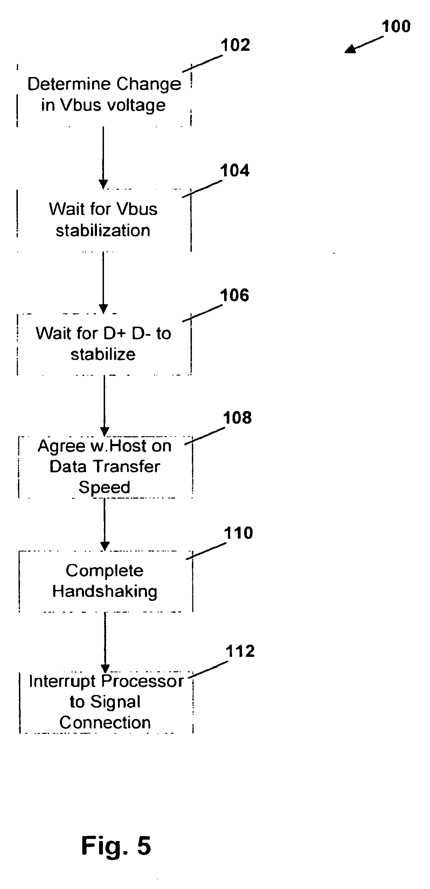

Figure 5 is a flowchart showing in more detail the steps implemented by the mobile device 12 to detect a connection to the host PC 22 (step 100). In particular, and available in further detail in the above-mentioned USB specification, upon connection of the device 12 to the host PC 22 via the USB cable 20, a change in Vbus is detected by the USB interface 34 (step 102). Timing delays are comprehended by the USB interface 34 of the device to permit stabilization of the Vbus power (step 104). Once the Vbus power is permitted to stabilize, the data connection on D+ and D- is tested for stability (step 106) before software in the host PC 22 attempts to reset or otherwise control the mobile device 12, and transfer speeds are agreed-upon between the host 22 and the mobile device 12 (step 108). Once handshaking has completed (step 110), the host 22 and the mobile device 12 are ready to communicate data. Of particular importance to the present invention, however, is that once handshaking has been completed, the mobile device 12 can confirm that it is validly connected to the host 22 and may therefore make the decision to determine how calls should be forwarded (step 200). It does not have to wait for some kind of instruction through the USB cable 20 from the host PC 22 to do so. The USB interface 34 invokes an interrupt or similar mechanism to inform the processor 28 of the valid connection (step 112). In response, the processor 28 invokes a program to handle call forwarding, as described below.

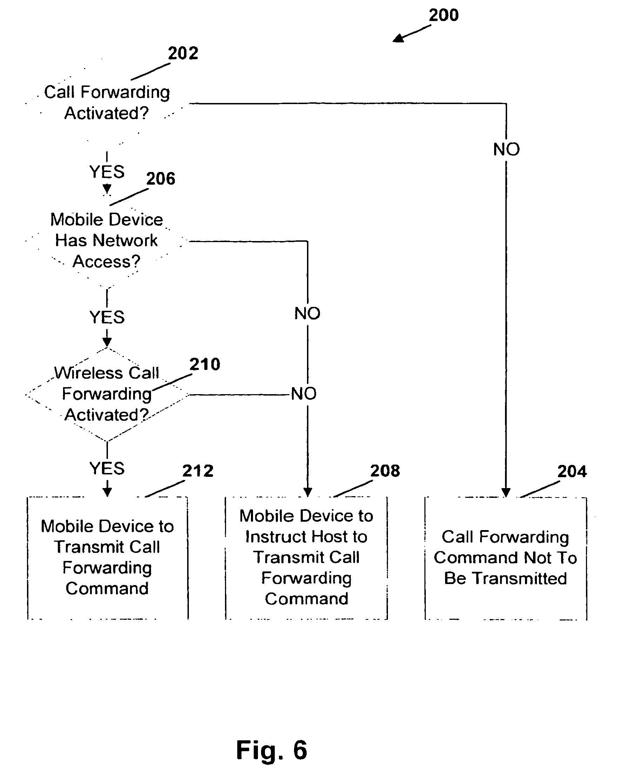

Figure 6 is a flow chart showing in more detail how it is determined that calls should be forwarded (step 200) once the connection to the host PC 22 has been established. The processor 28 of the mobile device 12 refers to user preferences stored in a user preference area in the memory 30 to determine whether calls should be forwarded upon connected to the host PC 22 (step 202). If the user preferences indicate that no automatic call forwarding is to take place upon connection to the host PC 22, then no call forwarding command needs to be sent (step 204). If the user preferences indicate that call forwarding is to take place upon connection to the host PC 22, then the processor 28 signals the transceiver 26 to test whether the mobile device 12 can wirelessly communicate with the network operations centre 50 (step 206). If it is found by the transceiver 26 that the mobile device 12 cannot wirelessly communicate with the network operations centre 50 (as would occur, for instance, if the mobile device 12 was outside of its wireless network range), then the processor 28 determines that call forwarding commands should be sent by the host PC 22 (step 208) via the network 23 to the network operations centre 50. If it is found by transceiver that the mobile device 12 is able to wirelessly communicate with the network operations centre 50, then the processor 28 determines from user preference tables in database 31 whether a user has set preferences to transmit call forwarding commands wirelessly (step 210). If so, the mobile device 12 determines that call redirecting commands should be sent wirelessly by the mobile device 12 to network operations centre 50 (step 212). If not, the mobile device 12 determines that call redirecting commands should be sent by the host PC 22 (step 208).

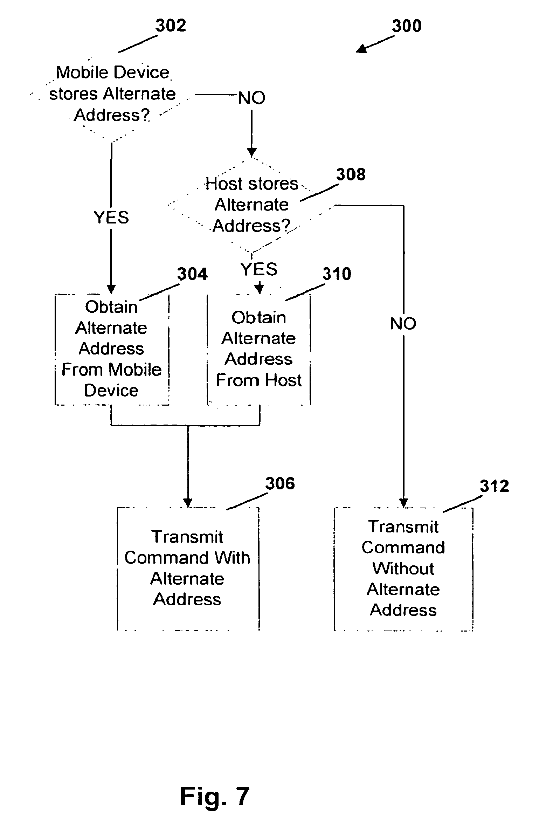

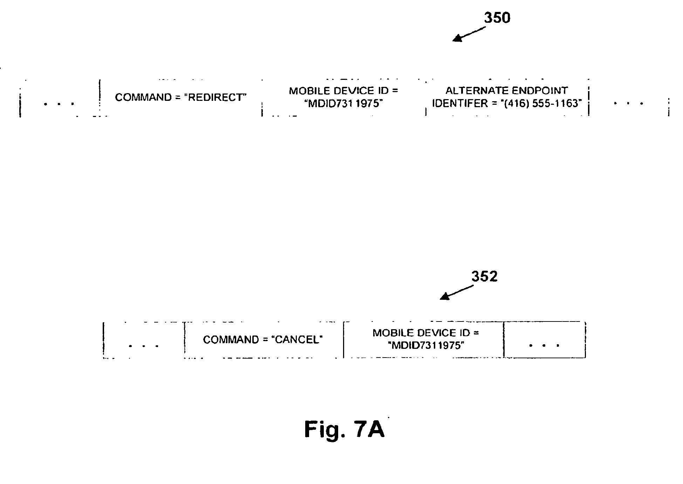

Once it is determined how calls should be forwarded (step 200), then the mobile device 12 initiates transmission of a command to the network operations centre 50 to redirect calls for the mobile device 12 to an alternate communications endpoint (step 300). Figure 7 shows step 300 in further detail.

As would be understood, the network operations centre 50, when receiving a call forwarding command, must know to which alternate communications endpoint 24 calls for the mobile device 12 should be redirected. To this end, the communications address of the desired alternate communications endpoint 24 in the form of a telephone number is stored in the database 63 in the memory 62 of the switch 54. The telephone number of the alternate communications endpoint 24 may be provided by the mobile device 12 either automatically or at the user's request when sending a call redirecting command, or by the host PC 22 when doing the same.

With reference to Figure 7, the processor 28 of the mobile device 12 first determines whether it has the alternate address in the memory 30 for including with the command (step 302). This is determined by referencing the memory 30 to find a record having host PC ID as the key. If the memory 30 has the alternate address, then the alternate address is retrieved from memory 30 by the processor 28 (step 304) and the processor 28 can proceed to arrange for transmission of the command with the alternate address (step 306). If the memory 30 does not have the alternate address, then the processor 28 sends a request for the alternate address through the USB interface 34 and the USB cable 20 to the host PC 22 (step 308). The host PC 22 sends a response including the alternate address (step 310) and the processor 28 can proceed to arrange for transmission of the command with the alternate address (step 306).

Should the host PC 22 not respond with the alternate address, then the processor 28 of the mobile device 12 proceeds under the assumption that the network operations centre switch 54 has the alternate address in its memory (step 312).

Figure 7A shows an exemplary call redirecting command 350 for sending from the mobile device 12 or the host PC 22 to the network operations centre switch 54.

If, during the determining (step 200), the processor 28 had established that the mobile device 12 is to transmit the command, the processor 28 retrieves the command from the memory 30. The processor 28 then inserts the alternate communications address (if obtained in step 300) into the command and instructs the transceiver 26 to transmit the command to the network operations centre 50 using the antenna 27.

If, during the determining (step 200), the processor 28 had established that the host PC 22 is to send the command, the processor 28 retrieves the command from the memory 30. The processor 28 inserts the alternate communications address (if obtained in step 300) and sends an instruction including the command through the USB interface 34 and the USB cable 20 to the host PC 22 for the host PC 22 to transmit the command. Upon receipt of the instruction, the host PC 22 transmits the command through the data network 23 to the network operations centre switch 54. It will be understood that, as needed, the host PC 22 may repackage the command into a suitable format, such as email, prior to its transmission.

Figure 7A shows exemplary call redirecting commands sent by either the host PC 22 or the mobile device 12 to the network operations centre switch 54. As can be seen, the call redirecting commands contain the "REDIRECT" command, an identification of the mobile device 12 (in this case, its hardware ID), and optionally an alternate endpoint identifier. The call redirecting command may contain error management data as would be understood by one of ordinary skill in the art for reducing the chance of misinterpretation by the network operations centre switch 54 due to corruption during transmission. An exemplary call redirecting cancel command is also shown containing the "CANCEL REDIRECT" command and an identification of the mobile device 12. It will be understood that these commands are shown in concept only, and may be transmitting in one of many forms, such as embedded in a wireless data packet, an email or other carrier suitable to the channel and the device.

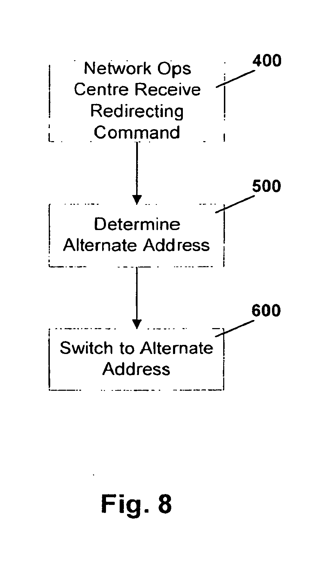

Figure 8 is a flow chart showing the general steps acted out by the network operations centre switch 54 in order to handle the call redirecting command. Upon receipt of the call redirecting command (step 400), the switch 54 determines the alternate communications endpoint 24 (step 500) and then makes arrangements so that incoming calls for the mobile device 12 are switched to the alternate communications endpoint 24.

Receipt of a call redirecting command (step 400) comprises the wireless transceiver 56 of the switch 54 providing the processor 66 with the received command. The processor 66 proceeds to determine in respect of which the device switch 54 handles the command has been sent, and the alternate address to which calls are to be redirected (step 500).

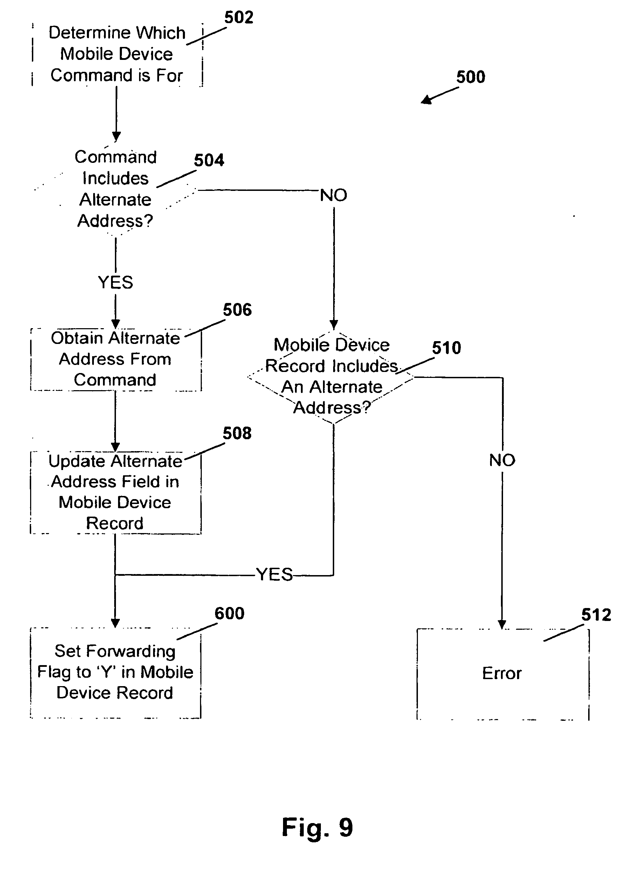

Figure 9 is a flowchart showing in more detail the steps involved in determining the alternate address (step 500). First, the processor 66 of the switch 54 parses the command to determine which device the command is for (step 502). If the alternate address is contained in the command (step 504), then the processor 66 obtains the alternate address from the command (step 506) and updates the alternate address field in the database 63 in the memory 62 (step 508). If the alternate address is not contained in the command, then the processor 66 looks up the record corresponding to the mobile device 12 in the memory 62 to determine whether an alternate address has already been specified (step 520). If at this stage the alternate address is not in the record of the mobile device 12 in the memory 62, then an error is declared (step 512) because a call forwarding command has been issued but no alternate address is available. Errors are handled in any suitable manner, as would be known by one of ordinary skill in the art. For instance, a message may be sent back to mobile device 12 indicating that call forwarding cannot proceed, or alternatively simply no action may be taken.

If the alternate address is available, then processor 66 sets the redirecting flag in the record corresponding to the mobile device 12 to 'Y' (step 600). That is, to forward calls to the alternate communications endpoint 24. Any subsequent calls for the mobile device 12 will be treated by the switch 54 as calls for the alternative communications endpoint 24. Such subsequent calls are redirected through the telecommunications interface 60 to the alternate communications endpoint 24. As would be understood, the channel through which calls are redirected (whether through the telecommunications interface 60, the Ethernet interface 58 or the wireless transceiver 56) depends on which the alternate communications endpoint 24 is specified by the alternate address.

If conditions on the mobile device 12 change, such as for instance the mobile device 12 determines from periodic testing that it is able to connect wirelessly to the network operations centre 50, transmission of another command may be initiated by the mobile device 12 to either cancel call redirecting or to change the alternate communications endpoint to which calls are redirected. Such changed conditions may include disconnection of the mobile device 12 from the host PC 22, a specific request of a user, a user preference keyed to time of day, etc.

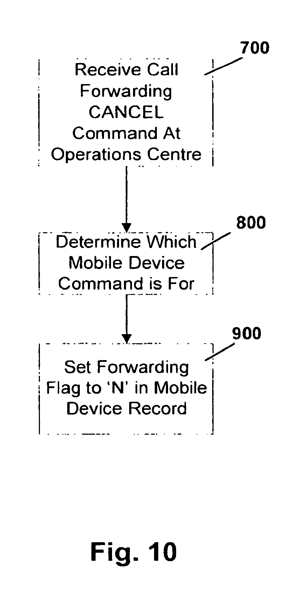

Figure 10 is a flowchart showing the general steps taken by the network operations centre 50 to cancel call redirecting in response to a "Cancel" command. It will be understood that a "Cancel" command is very similar in form to a redirect command.

Referring to Figure 10, the processor 66 of the network operations centre switch 54 first receives a "Cancel" call redirecting command (step 700). As with the redirecting command process (see Figure 8), the processor 66 proceeds to determine that the command has been sent in respect of the mobile device 12 (step 800). At this stage, the processor 66 refers to the database 63 in memory 62 and alters the record for the mobile device 12 in the database 63 by setting the redirecting field to 'N' (step 900). That is, call redirecting for the mobile device 12 is de-activated.

A host could be a number of different devices, as long as the mobile device is able to detect its connection to the host such that initiating transmission of the redirecting command has a meaningful effect. That is, the nature of the connection must be that which enables the mobile device to know it has been connected to a valid host and therefore the necessity of initiating transmission of a redirecting command. As such, the host could be a personal computer (as described above), a battery charger, a standalone cradle for car or home, or any other suitable device.

While a USB connection has been described, it will be understood that the methods and systems described herein are applicable to other types of connections. For instance, Bluetooth^{™} short-range wireless transmission could be used by a mobile device to connect to a host device. When a mobile device is carried into a room having the host, for instance, the mobile device and host would be within Bluetooth transmission range and therefore mobile device could initiate transmission of the call redirecting command on that basis. Other connections might be contemplated, such as infrared, serial data, parallel data, regular power etc. Also, on a very basic level, a connection could be signaled by closure of a physical switch on the mobile device when physically coming into contact with a host cradle, for instance.

It is also conceivable that, where the host is instructed to transmit the command, that the command could be transmitted using alternate wireless means by the host, or the host further instruct another component to which it is connected to send the command on its behalf.

Many permutations and combinations of the ideas embodied above can be contemplated. For instance, the database 31 on the mobile device 12 may include a number of alternate communications addresses associated with respective host IDs. As such, the mobile device could be connected to any one of a number of hosts, and initiate transmission of a redirecting command for redirecting to associated respective alternate communications endpoints.

Furthermore, communications for the endpoint could be phone calls and signals, emails, chat communications, etc. The alternate communications endpoint could be a standard telephone, an IP telephone, another mobile device, a cell phone, a computer connected to the Internet, a server for storing emails for access by users, or any other device that is capable of being referred to or of storing communications using a unique communications endpoint identifier such as an IP address, email address etc.

The methods and systems of the present invention may be implemented at least partly in software. The software would be in the form of a computer readable medium containing processor-executable code thereon for performing the disclosed steps. In the mobile device, for Instance, detection of the USB +5V charging voltage by a circuit could trigger loading and/or operation of a software program from nonvolatile memory for handling determining whether the voltage has stabilized, confirm the connection by handling successful handshaking, and trigger call redirecting or fully handle it.

## Claims

1. A method in a mobile device (12) of triggering redirecting of communications for the device (12), the method comprising:
detecting (100) the connection of the mobile device (12) to a host (22);
receiving from the host (22), a host identifier that identifies the host (22);
using the received host identifier as a key into a table on the mobile device (12) to determine (200) a command to redirect calls for the mobile device (12) to an alternate communications endpoint;
determining (302) whether a memory in the mobile device (12) stores an identification of the alternate communications endpoint that corresponds to the received host identifier;
In the event that the mobile device (12) stores an identification of the alternate communications endpoint, retrieving (304) the identification of the alternate communication endpoint from the mobile device;
in the event that the mobile device does not store an identification of the alternate communications endpoint determining (308) whether the host (22) stores the identification of the alternate communications endpoint, and if so retrieving (310) the identification of the alternate communications endpoint from the host (22); and
causing (306) the command and the identification of the alternate communications endpoint to be transmitted to a network operations center.

2. The method of claim 1, wherein in the event that the identification of the alternate communications endpoint is stored on neither the mobile device (12) or the host (22), the network operations center causes redirecting of communications for the mobile device 912) based on an identification of the alternate communications endpoint stored in ' memory of the network operations center.

3. The method of any preceding claim, wherein the connection is an advanced Universal Serial Bus (USB) connection and the detecting (100) connection comprises one of: detecting (100) a predetermined charging voltage level applied by the host (22) through the USB connection, and receiving the host identifier by the mobile device (12) through the connection.

4. The method of any of claims 1 - 2, wherein the connection is a short-range wireless connection.

5. The method of claim 4, wherein the connection is one of a Bluetooth and an infrared connection.

6. The method of any of claims 1 -2, wherein the detection of a connection (100) comprises detecting the closing of a physical switch when the mobile device (12) and the host (22) are connected.

7. The method of any preceding claim, wherein the command and the identification are caused to be transmitted to the network operations center either by the host (22) or wirelessly by the mobile device (12).

8. The method of any preceding claim, further comprising:
prior to causing the command and identification to be transmitted to the network operations center, testing the mobile device (12) to determine whether the mobile device (12) can wirelessly communicate with the network operations center.

9. The method of claim 8, wherein in the event that testing determines that the mobile device (12) cannot wirelessly communicate with the network operations center at the time of testing, the command and identification are caused to be transmitted to the network operations center by the host (22).

10. The method of claim 8, wherein in the event that testing determines that the mobile device (12) can wirelessly communicate with the network operations center at the time of testing, the command and identification are caused to be transmitted wirelessly to the network operations center by the mobile device (12).

11. A mobile device (12) incorporating a system configured to trigger redirection of communications for the mobile device (12) according to the method of any preceding claim, the system comprising:
a memory (30) storing a table associating host identifiers with respective commands to redirect calls for the mobile device (12) to respective communications endpoints;
a detector operable to detect connection of the mobile device (12) to a host (22);
a receiver operable to receive from a host, a host identifier that Identifies the host (22); and
a processor (28) operable to perform said determining and retrieving and cause the command to be transmitted to a network operations center.

12. The device of claim 11, wherein the connection Is an advanced Universal Serial Bus connection and the detector is one of a charging voltage level detector for detecting (100) a predetermined charging voltage level applied by the host (22) through the USB connection, and a host identifier detector for detecting (100) receipt by the mobile device (12) of the host identifier through the connection.

13. The device of claim 11, wherein the connection is a short-range wireless connection and the detector is a short-range wireless connection detector.

14. The device of claim 11, wherein the connection is one of a RF and an infrared connection.

15. The device of any of claims 11 to 14, wherein the detector is a circuit having a physical switch that doses when the mobile device (12) and the host (22) are connected.

## Patentansprüche

1. Verfahren in einem mobilen Endgerät (12) zum Auslösen der Neuorientierung der Kommunikationen für das Endgerät (12), das Verfahren umfassend:
das Erkennen (100) der Verbindung des mobilen Endgeräts (12) zu einem Host (22);
das Empfangen einer Host-Kennung von dem Host (12), welche den Host (22) identifiziert;
das Verwendung der empfangenen Host-Kennung als Schlüssel in einer Tabelle des mobilen Endgeräts (12) zum Ermitteln (200) eines Befehls zum Neuorientieren von Anrufen für das mobile Endgerät (12) zu einem Ausweich-Kommunikationsendpunkt;
das Ermitteln (302), ob ein Speicher in dem mobilen Endgerät (12) eine Kennung des Ausweich-Kommunikationsendpunkts gespeichert hat, die mit der empfangenen Host-Kennung übereinstimmt;
in dem Fall, dass in dem mobilen Endgerät (12) eine Kennung des Ausweich-Kommunikationsendpunkts gespeichert ist, das Abrufen (304) der Kennung des Ausweich-Kommunikationsendpunkts von dem mobilen Endgerät;
in dem Fall, dass in dem mobilen Endgerät (12) keine Kennung des Ausweich-Kommunikationsendpunkts gespeichert ist, das Ermitteln (308), ob der Host (22) die Kennung des Ausweich-Kommunikationsendpunkts gespeichert hat, und wenn das der Fall ist, das Abrufen (310) der Kennung des Ausweich-Kommunikationsendpunkts von dem Host (22); und
das Bewirken (306), dass der Befehl und die Kennung des Ausweich-Kommunikationsendpunkts zu einem Network Operations Center übertragen werden.

2. Verfahren gemäß Anspruch 1, wobei in dem Fall, dass die Kennung des Ausweich-Kommunikationsendpunkts weder im mobilen Endgerät (12) noch im Host (22) gespeichert ist, vom Network Operations Center bewirkt wird, dass die Kommunikationen für das mobile Endgerät (12) auf der Grundlage einer Kennung des Ausweich-Kommunikationsendpunkts neuorientiert werden, die im Speicher des Network Operations Center gespeichert ist.

3. Verfahren gemäß einem der vorherigen Ansprüche, wobei es sich bei der Verbindung um eine fortgeschrittene USB-Verbindung (Universal Serial Bus) handelt und das Erkennen (100) der Verbindung eines der Folgenden umfasst: das Erkennen (100) eines vorgegebenen Ladespannungspegels, der über die USB-Verbindung durch den Host (22) angelegt wird, und das Empfangen der Host-Kennung durch das mobile Endgerät (12) über die Verbindung.

4. Verfahren gemäß einem der Ansprüche 1 - 2, wobei es sich bei der Verbindung um eine Nahbereichsdrahtlosverbindung handelt.

5. Verfahren gemäß Anspruch 4, wobei es sich bei der Verbindung um eine Bluetooth- oder eine Infrarotverbindung handelt.

6. Verfahren gemäß einem der Ansprüche 1 - 2, wobei das Erkennen einer Verbindung (100) das Erkennen des Schließens eines physischen Schalters umfasst, wenn das mobile Endgerät (12) und der Host (22) verbunden werden.

7. Verfahren gemäß einem der vorherigen Ansprüche, wobei das Bewirken der Übertragung des Befehl und der Kennung zu dem Network Operations Center entweder durch den Host (22) oder drahtlos durch das mobile Endgerät (12) erfolgt.

8. Verfahren gemäß einem der vorhergehenden Ansprüche, des Weiteren umfassend:
vor dem Bewirken, dass der Befehl und die Kennung zu dem Network Operations Center übertragen werden, das Testen des mobilen Endgeräts (12), um zu ermitteln, ob das mobile Endgerät (12) drahtlos mit dem Network Operations Center kommunizieren kann.

9. Verfahren gemäß Anspruch 8, wobei in dem Fall, dass bei dem Testen ermittelt wird, dass das mobile Endgerät (12) zum Zeitpunkt des Testens nicht drahtlos mit dem Network Operations Center kommunizieren kann, durch den Host (22) bewirkt wird, dass der Befehl und die Kennung zu dem Network Operations Center übertragen werden.

10. Verfahren gemäß Anspruch 8, wobei in dem Fall, dass bei dem Testen ermittelt wird, dass das mobile Endgerät (12) zum Zeitpunkt des Testens drahtlos mit dem Network Operations Center kommunizieren kann, durch das mobile Endgerät (12) bewirkt wird, dass der Befehl und die Kennung zu dem Network Operations Center übertragen werden.

11. Mobiles Endgerät (12) zur Verkörperung eines Systems, das zum Auslösen der Neuorientierung der Kommunikationen für das mobile Endgerät (12) entsprechend dem Verfahren gemäß einem der vorherigen Ansprüche konfiguriert ist, das System umfassend:
einen Speicher (30) zum Speichern einer Tabelle zum Zuordnen von Host-Kennungen zu jeweiligen Befehlen zur Neuorientierung von Anrufen für das mobile Endgerät (12) zu entsprechenden Kommunikationsendpunkten;
einen Detektor, der verwendbar ist, um die Verbindung des mobilen Endgeräts (12) zu einem Host (22) zu erkennen;
einen Empfänger, der verwendbar ist, um von einem Host eine Host-Kennung zu empfangen, welche den Host (22) identifiziert; und
einen Prozessor (28), der verwendbar ist, um das Ermitteln und Abrufen und Bewirken, dass der Befehl zu einem Network Operations Center übertragen wird, durchzuführen.

12. Endgerät gemäß Anspruch 11, wobei es sich bei der Verbindung um eine fortgeschrittene USB-Verbindung (Universal Serial Bus) handelt und der Detektor eines der Folgenden ist: ein Ladespannungspegel-Detektor zum Erkennen (100) eines vorgegebenen Ladespannungspegels, der über die USB-Verbindung durch den Host (22) angelegt wird, und einen Host-Kennungs-Detektor zum Erkennen (100) des Empfangs der Host-Kennung durch das mobile Endgerät (12) über die Verbindung.

13. Endgerät gemäß Anspruch 11, wobei es sich bei der Verbindung um eine Nahbereichsdrahtlosverbindung handelt und es sich bei dem Detektor um einen Nahbereichsdrahtlosverbindungs-Detektor handelt.

14. Endgerät gemäß Anspruch 11, wobei es sich bei der Verbindung um eine HF- oder eine Infrarotverbindung handelt.

15. Endgerät gemäß einem der Ansprüche 11 bis 14, wobei es sich bei dem Detektor um eine Schaltung handelt, die einen physischen Schalter enthält, der geschlossen wird, wenn das mobile Endgerät (12) und der Host (22) verbunden werden.

## Revendications

1. Un procédé dans un dispositif mobile (12) de déclenchement de la redirection de communications pour le dispositif (12), le procédé comprenant :
la détection (100) de la connexion du dispositif mobile (12) à un hôte (22),
la réception de l'hôte (22) d'un identifiant d'hôte qui identifie l'hôte (22),
l'utilisation de l'identifiant d'hôte reçu en tant que clé dans une table du dispositif mobile (12) de façon à déterminer (200) une commande destinée à rediriger des appels pour le dispositif mobile (12) vers un point d'extrémité de communication de rechange,
l'opération visant à déterminer (302) si une mémoire du dispositif mobile (12) conserve en mémoire une identification du point d'extrémité de communication de rechange qui correspond à l'identifiant d'hôte reçu,
dans le cas où le dispositif mobile (12) conserve en mémoire une identification du point d'extrémité de communication de rechange, la récupération (304) de l'identification du point d'extrémité de communication de rechange auprès du dispositif mobile,
dans le cas où le dispositif mobile ne conserve pas en mémoire une identification du point d'extrémité de communication de rechange, l'opération visant à déterminer (308) si l'hôte (22) conserve en mémoire l'identification du point d'extrémité de communication de rechange, et, si c'est le cas, la récupération (310) de l'identification du point d'extrémité de communication de rechange auprès de l'hôte (22), et
l'opération visant à amener (306) la commande et l'identification du point d'extrémité de communication de rechange à être transmises à un centre d'exploitation de réseau.

2. Le procédé selon la Revendication 1, où, dans le cas où l'identification du point d'extrémité de communication de rechange n'est conservée en mémoire ni sur le dispositif mobile (12) ni sur l'hôte (22), le centre d'exploitation de réseau exécute une redirection de communications destinées au dispositif mobile (12) en fonction d'une identification du point d'extrémité de communication de rechange conservée en mémoire dans une mémoire du centre d'exploitation de réseau.

3. Le procédé selon l'une quelconque des Revendications précédentes, où la connexion est une connexion USB (bus série universel) avancée et la détection (100) de la connexion comprend une des opérations suivantes : la détection (100) d'un niveau de tension de charge prédéterminé appliqué par l'hôte (22) par l'intermédiaire de la connexion USB ou la réception de l'identifiant d'hôte par le dispositif mobile (12) par l'intermédiaire de la connexion.

4. Le procédé selon l'une quelconque des Revendications 1 ou 2, où la connexion est une connexion sans fil à courte portée.

5. Le procédé selon la Revendication 4, où la connexion est une connexion parmi une connexion Bluetooth et une connexion infrarouge.

6. Le procédé selon l'une quelconque des Revendications 1 ou 2, où la détection d'une connexion (100) comprend la détection de la fermeture d'un commutateur physique lorsque le dispositif mobile (12) et l'hôte (22) sont connectés.

7. Le procédé selon l'une quelconque des Revendications précédentes, où la commande et l'identification sont amenées à être transmises au centre d'exploitation de réseau soit par l'hôte (22) soit de manière non filaire par le dispositif mobile (12).

8. Le procédé selon l'une quelconque des Revendications précédentes, comprenant en outre :
avant d'amener la commande et l'identification à être transmises au centre d'exploitation de réseau, le test du dispositif mobile (12) de façon à déterminer si le dispositif mobile (12) est en mesure de communiquer de manière non filaire avec le centre d'exploitation de réseau.

9. Le procédé selon la Revendication 8, où, dans le cas où l'opération de test détermine que le dispositif mobile (12) n'est pas en mesure de communiquer de manière non filaire avec le centre d'exploitation de réseau au moment de l'opération de test, la commande et l'identification sont amenées à être transmises au centre d'exploitation de réseau par l'hôte (22).

10. Le procédé selon la Revendication 8, où, dans le cas où l'opération de test détermine que le dispositif mobile (12) est en mesure de communiquer de manière non filaire avec le centre d'exploitation de réseau au moment de l'opération de test, la commande et l'identification sont amenées à être transmises de manière non filaire au centre d'exploitation de réseau par le dispositif mobile (12).

11. Un dispositif mobile (12) équipé d'un système configuré de façon à déclencher la redirection de communications pour le dispositif mobile (12) selon le procédé de l'une quelconque des Revendications précédentes, le système comprenant :
une mémoire (30) conservant en mémoire une table associant des identifiants d'hôte à des commandes respectives de façon à rediriger des appels pour le dispositif mobile (12) vers des points d'extrémité de communication respectifs,
un détecteur utilisable pour détecter une connexion du dispositif mobile (12) vers un hôte (22),
un récepteur utilisable pour recevoir d'un hôte un identifiant d'hôte qui identifie l'hôte (22), et
un processeur (28) utilisable pour exécuter lesdites opérations de détermination et de récupération et pour amener la commande à être transmise à un centre d'exploitation de réseau.

12. Le procédé selon la Revendication 11, où la connexion est une connexion USB (bus série universel) avancée et le détecteur est un détecteur parmi : un détecteur de niveau de tension de charge destiné à détecter (100) un niveau de tension de charge prédéterminé appliqué par l'hôte (22) par l'intermédiaire de la connexion USB et un détecteur d'identifiant d'hôte destiné à détecter (100) la réception par le dispositif mobile (12) de l'identifiant d'hôte par l'intermédiaire de la connexion.

13. Le procédé selon la Revendication 11, où la connexion est une connexion sans fil à courte portée et le détecteur est un détecteur de connexion sans fil à courte portée.

14. Le procédé selon la Revendication 11, où la connexion est une connexion parmi une connexion radioélectrique et une connexion infrarouge.

15. Le procédé selon l'une quelconque des Revendications 11 à 14, où le détecteur est un circuit possédant un commutateur physique qui se ferme lorsque le dispositif mobile (12) et l'hôte (22) sont connectés.
